# EUROPÄISCHE PATENTSCHRIFT

(11) **EP 3 377 228 B1**
(45) Veröffentlichungstag und Bekanntmachung des Hinweises auf die Patenterteilung: **19.02.2020**
(21) Anmeldenummer: 15812964.3
(22) Anmeldetag: 19.11.2015
(51) Int. Cl.: B02C 15/00

(54) **MAHLSCHÜSSEL**
MILLING BOWL
CUVE DE BROYAGE

(43) Veröffentlichungstag der Anmeldung: 26.09.2018
(73) Patentinhaber: Loesche GmbH, 40549 Düsseldorf (DE)
(72) Erfinder: KLOKOW, Alexander, 40549 Düsseldorf (DE); HAMANN, Stefan, 40549 Düsseldorf (DE); HAMMESFAHR, Heide, 40549 Düsseldorf (DE); ZYSK, Karl-Heinrich, 40549 Düsseldorf (DE)
(74) Vertreter: Wunderlich & Heim Patentanwälte Partnerschaftsgesellschaft mbB
(86) Internationale Anmeldenummer: PCT/EP2015/077039
(87) Internationale Veröffentlichungsnummer: WO 2017/084708

(56) Entgegenhaltungen:
- DE-A1- 10 305 915
- DE-B- 1 194 685

## Beschreibung

Die Erfindung betrifft eine Mahlschüssel, insbesondere für Vertikalmühlen, gemäß Oberbegriff des Anspruches 1, und ein Verfahren zur Herstellung einer ringförmigen Mahlschüssel mit einer im Vertikalschnitt etwa kegelstumpfförmigen Hohlkörperstruktur gemäß Oberbegriff des Anspruches 15.

Mahlschüsseln dieser Art werden als wesentliche Baugruppe in Vertikalmühlen eingesetzt, die für die Materialzerkleinerung zum Beispiel von Zementrohmaterial, Klinker, Schlacken, verschiedenen Mineralien oder auch Kohle verwendet werden.

Als Beispiel für derartige Mahlschüsseln wird auf die EP 2 242 583 B1 öder DE 103 05 915 A1 hingewiesen.

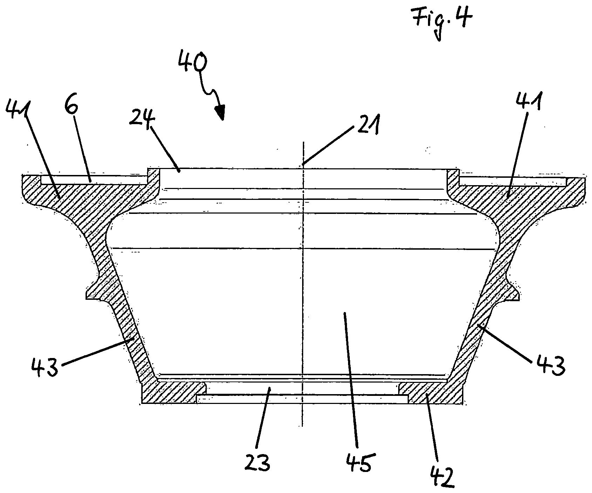

Eine ähnliche Mahlschüssel gemäß Stand der Technik ist in der Fig. 4 dargestellt. Bisher war es üblich, Mahlschüsseln 40 dieser Art einstückig herzustellen und aus einem Gussmaterial zu fertigen.
Die Mahlschüssel 40 weist im unteren Bereich einen Fußflansch 42 auf und im oberen Bereich einen Kopfflansch 41. Insgesamt gesehen hat diese Mahlschüssel 40 etwa eine kegelstumpfförmige und nach unten verjüngend zulaufende Struktur, wobei eine nach unten konisch zulaufende Seitenwandung 43 den Kopfflansch 41 mit dem unteren Fußflansch 42 zu einer ringförmigen Mahlschüssel verbindet.

Die Mahlschüssel 40 ist üblicherweise symmetrisch zu ihrer Rotationsachse 21 ausgelegt und hat eine Bodenöffnung 23 sowie eine obere Schüsselöffnung 24, so dass zwischen diesen Öffnungen ein Innenhohlraum 45 gebildet wird.

Eine im Kopfflansch 41 vorgesehene Rinne 6 nimmt dabei üblicherweise Segmente von Mahlplatten auf, die im Betrieb die entsprechende Mahlbahn für die Zerkleinerung und das Vermahlen von Materialien bildet.

Im fertig montierten Zustand ruht eine derartige Mahlschüssel 40 im Bereich des Fußflansches 42 auf entsprechenden Lagern, wobei der rotative Antrieb für die Mahlschüssel 40 im Bereich der Bodenöffnung 23 der Mahlschüssel vorgesehen ist.

Aufgrund stetiger Forderungen nach immer größeren Vertikalmühlen und damit größer werdenden Mahlschüsseln für eine Erhöhung der Durchsatzleistung der Vertikalmühlen, treten zum Beispiel im Bereich der Zementherstellung und der meist etwas entlegenen Produktionsstandorte für Zement, Probleme bei der Herstellung und beim Transport dieser immer größer werdenden einstückigen Mahlschüsseln aus Gussmaterial auf.
So sind zum Beispiel Vertikalmühlen im Einsatz, die im oberen Bereich der Mahlschüsseln einen Durchmesser von nahezu 8 m und am bodenseitigen Mahlschüsselhals einen Durchmesser von 5 m aufweisen.

Aufgrund der problematischen einstückigen Herstellung dieser Mahlschüsseln ist man einerseits nur auf einige wenige Herstellungsfirmen derartiger Mahlschüsseln angewiesen.
Zum anderen besteht ein erhebliches Transportproblem derartiger Mahlschüsseln, die zum Beispiel ein Gesamtgewicht von etwa 90 t und einen Durchmesser von 8 m oder größer haben, um diese mit Schwerlastkraftfahrzeugen an etwas entlegenere Produktionsstellen transportieren zu können, da dort meist eine entsprechend erforderliche Straßen- und Infrastruktur für den Transport derartiger Schwerlasten nicht zur Verfügung steht.

Aus der DE 11 94 685 ist eine Mahlschüssel für eine Vertikalmühle bekannt, die speziell eine Kugel- oder Rollenquetschmühle mit einem aus mehreren Abschnitten bestehenden Mahlring betrifft.

Die dort vorgesehene Mahlschüssel weist einen oberen ringförmigen Kopfflansch zur Bildung der eigentlichen Mahlbahn auf, wobei der Kopfflansch über ein starr verbindendes Mittelteil auf einem unteren Fußflansch festgelegt ist. Der bei der Herstellung des Mahlringes sich zwischen Kopfflansch und Fußflansch bildende Hohlraum wird mit einer aushärtbaren Vergussmasse verfüllt, wobei mechanische Befestigungsmittel zur Abstandsfixierung zwischen Kopf- und Fußflansch und dem dazwischen angeordneten Material der Vergussmasse, vorgesehen sind.
Bei dieser letztgenannten Konstruktion muss es als nachteilig angesehen werden, dass der vertikale Abstand zwischen Fußflansch und Kopfflansch und der dazwischen gebildete Hohlraum für die Vergussmasse relativ klein gehalten werden muss und auf der Basis dieser Konstruktion nur eine geringe Flexibilität im Hinblick auf die Konstruktionshöhe der gesamten Mahlschüssel besteht.

Der Erfindung liegt daher die **Aufgabe** zugrunde, die vorausgehend genannten Nachteile überwinden zu können und eine größere Flexibilität bei der Herstellung derartiger Mahlschüsseln auch bei größer werdendem Durchmesser und damit größerem Gewicht zu erreichen, wobei eine vereinfachte Transportabwicklung verbunden mit größerer Unabhängigkeit von Spezialherstellungsfirmen und verbesserte Kostenstruktur erreicht werden sollte.

Diese Aufgabe wird erfindungsgemäß bei einer Mahlschüssel der eingangs genannten Art durch die Merkmale des Anspruches 1 und bei einem Verfahren zur Herstellung einer derartigen Mahlschüssel durch die Merkmale des Anspruches 15 gelöst.

Ein wesentlicher Kerngedanke der Erfindung ist, von einer einstückigen Herstellung einer aus Gussmaterial gefertigten Mahlschüssel abzugehen und stattdessen eine Mahlschüssel mit mehreren kleineren Baugruppen zu konzipieren, wobei Hohlraumstrukturen bewusst in der Struktur der Mahlschüssel vorgesehen sind und diese Hohlraumstrukturen im Nahbereich des vorgesehenen Aufstellungsortes der Mahlschüssel mit einem aushärtbaren, insbesondere nicht-schrumpfenden, Vergussmaterial zu einer starren Einheit einer Mahlschüssel gefertigt werden können.

Dieser wesentliche Kerngedanke wird gemäß der Erfindung bei einer Mahlschüssel für Vertikalmühlen mit dem Konzept realisiert, einen unteren, ringförmigen und separaten Fußflansch und einem oberen, ringförmigen separaten Kopfflansch zur Bildung oder Aufnahme einer Mahlbahn der Vertikalmühle vorzusehen. Die ringförmige Mahlschüssel ist dabei im Bereich um ihre Rotationsachse herum hohl ausgebildet. Der Kopf- und der Fußflansch sind mittels eines Mittelteils starr miteinander verbunden.
Dieses zwischen Kopf- und Fußflansch vorgesehene Mittelteil ist doppelwandig mit zwei beabstandeten Gehäuseschalen die separat von Kopf- und Fußflansch hergestellt sind, ausgebildet.
Der zwischen den Gehäuseschalen des Mitteilteils und den beiden Flanschen in dieser Art gebildete Hohlraum ist mit einer aushärtbaren, insbesondere nicht-schrumpfenden Vergussmasse verfüllt, so dass die beiden Flansche mit dem Mittelteil nach der Aushärtung der Vergussmasse eine rotationssteife Mahlschüssel bilden.

In verfahrensmäßiger Hinsicht erfolgt die Herstellung einer erfindungsgemäßen ringförmigen Mahlschüssel mit im Vertikalschnitt etwa kegelstumpfförmiger Hohlkörper-Struktur dadurch, dass der Kopfflansch und der Fußflansch der Mahlschüssel mehrteilig oder einteilig separat hergestellt werden. Der im Durchmesser größere Kopfflansch wird dabei bevorzugt mehrteilig ausgebildet und herstellt, während beim üblicherweise durchmesserkleineren Fußflansch im Hinblick auf Abmessung und Gewicht eine einteilige separate Herstellung unter Berücksichtigung von nachfolgenden

Transportaspekten zweckmäßigerweise realisiert wird.
Separat von Kopf- und Fußflansch wird verfahrensmäßig ein Mittelteil, das zwei Gehäuseschalen aufweist, hergestellt.
Dieses Mitteilteil ist zur Verbindung zwischen dem Fußflansch und dem Kopfflansch vorgesehen und trägt im Rahmen der Montage sozusagen den oberen Kopfflansch. Vor einer Verbindung des Mitteilteils mit dem Kopfflansch und dem Aufbringen des Kopfflansches auf dem Mittelteil werden Verstärkungsanker an gegeneinander gerichteten Flächen der Gehäuseschalen angebracht.
Nachfolgend werden die Baugruppen, Kopfflansch, Gehäuseschalen des Mittelteils und Fußflansch miteinander fest verbunden, wobei insbesondere zwischen den Gehäuseschalen ein ringförmiger Hohlraum gebildet wird.
Durch Öffnungen im Kopfflansch wird dann in den zwischen den Gehäuseschalen gebildeten Hohlraum eine aushärtbare Vergussmasse eingebracht und diese Vergussmasse, die nicht-schrumpfende, etwas quellende Materialeigenschaften aufweist, ausgehärtet. Aufgrund der etwas quellenden Eigenschaft und damit des Volumens der Vergussmasse wird zwischen den Baugruppen Kopfflansch, Gehäuseschalen und Fußflansch eine "Dichtspeisung" erreicht, so dass nach Aushärtung der Vergussmasse eine starre, rotationssteife Mahlschüssel als Einheit vorliegt.

Unter Dichtspeisung wird in diesem Zusammenhang verstanden, dass die Vergussmasse sehr dicht und ohne Lufteinschlüsse eingebracht und ausgehärtet wird, so dass auch eine enge Verbindung mit den den Hohlraum begrenzenden Flächen von Gehäuseschalen und Flanschen erreicht wird, um einwirkende Mahl- und Rotationskräfte nicht nur über die Gehäuseschalen auf den Fußflansch zu übertragen, sondern im Wesentlichen auch über das ausgehärtete Vergussmaterial.

Wesentliche Vorteile der erfindungsgemäßen Mahlschüssel und des entsprechenden Herstellungsverfahrens sind insbesondere die günstigeren Herstellkosten für die kleineren, leichteren und separat hergestellten einzelnen Gussteile, da diese in vielen Gießereien produziert werden können und man nicht auf Großteile wie komplette Guss-Mahlschüsseln spezialisierte Firmen angewiesen ist. Zudem können die Transportkosten erheblich gesenkt werden, da keine Sondertransporte für die bisherigen einstückigen Mahlschüsseln mehr erforderlich sind.

Auch kann die Herstellung der erforderlichen Gehäuseschalen in den Nahbereich des Produktions- und Aufstellungsortes der entsprechenden Vertikalmühle vergeben werden. Ebenso kann die Endmontage und das Verfüllen der Mahlschüssel mit entsprechender Vergussmasse im Nahbereich beziehungsweise direkt am Aufstellungsort der entsprechenden Vertikalmühle erfolgen.

Zweckmäßigerweise weisen die Gehäuseschalen des Mittelteils der Mahlschüssel Verstärkungsanker auf, die in der ausgehärteten Vergussmasse eingebettet sind.
Die Verstärkungsanker können zu diesem Zweck vor Einbringen der Vergussmasse an den zum Hohlraum orientierten Innenflächen der Gehäuseschalen angebracht, zum Beispiel angeschweißt sein, und als Spreizanker vorgesehen werden.
Zur weiteren Verbesserung der Steifigkeit des Mittelteils können die Verstärkungsanker endseitig an beiden Innenflächen der Gehäuseschalen verschweißt oder anderweitig befestigt sein.
Die Orientierung und Anordnung dieser Verstärkungsanker erfolgt nicht nur in radialer Richtung der Mahlschüssel, sondern auch in unterschiedlicher Höhe an den Gehäuseschalen, wobei auch gezielt überkreuzende oder speichenartige Anordnungen zu anderen Verstärkungsankern vorgesehen werden.
Die Verstärkungsanker werden daher mit unterschiedlicher Ausrichtung in dem zwischen den Gehäuseschalen gebildeten Hohlraum angeordnet und vorzugsweise endseitig an beiden Gehäuseschalen fixiert.
Im Hinblick auf eine weitere verbesserte Übertragung von einwirkenden Kräften und Drehmomenten wird auch eine Orientierung der Verstärkungsanker entgegengesetzt zur Rotationrichtung der Mahlschüssel im Betrieb, mit berücksichtigt.

Durch die derart eingebrachten Verstärkungsanker wird die Festigkeit des im Hohlraum vergossenen Ringkernes erhöht und ein Verbund zwischen den Gehäuseschalen und dem Ringkern geschaffen.
Als Verstärkungsanker können zum Beispiel Steinschrauben nach DIN 529 aber auch freigeformte Verstärkungsanker aus Bewehrungsstahl, wie er in Betonmaterialien eingesetzt wird, verwendet werden. Die Verstärkungsanker können je nach Position, Größe und Anzahl unterschiedliche Formen, insbesondere U-, S- oder L-förmig, vorgesehen werden. Die Verbindung der Verstärkungsanker mit den Gehäuseschalen kann sowohl eine geschraubte als auch eine verschweißte Verbindung betreffen.

Zweckmäßigerweise wird der Kopfflansch einen größeren Außendurchmesser aufweisen als der Fußflansch, da hierdurch einerseits die Breite der Mahlbahn und damit auch letztendlich die Durchsatzleistung einer Vertikalmühle im Betrieb mitbestimmt wird.
Andererseits hat sich gezeigt, dass ein durchmesserkleinerer Fußflansch ausreichend ist, um die darüber auf das Lager einwirkenden Kräfte aufzunehmen und des Weiteren, um die über den Rotationsantrieb einwirkenden Kräfte auf die Mahlschüssel übertragen zu können.

Die Mahlschüssel weist daher in bevorzugter Form zwei Gehäuseschalen auf, die im Vertikalschnitt etwa keilförmig zueinander mit verjüngender Struktur in Richtung des Fußflansches angeordnet sind, so dass bei dieser Anordnung die Mahlschüssel etwa einen Hohlkörper mit kegelstumpfförmiger äußerer Ringstruktur bildet.

Als Alternative zu der vorausgehend genannten bevorzugten Struktur können die zwei Gehäuseschalen etwa auch einen gleichbleibenden radialen Abstand zueinander aufweisen, wobei auch eine vertikal verlaufende Ringwandung durch den Mittelteil einer Mahlschüssel gebildet wird. Auch hierbei kann ein radial größerer Kopfflansch vorgesehen sein.

Einen erheblichen Vorteil im Hinblick auf Kosten und Transport erreicht man, indem mindestens der Kopfflansch mehrteilig ausgebildet ist.
Der Kopfflansch kann daher aus mehreren Segmenten bestehen, die erst am Bestimmungsort mit den weiteren Baugruppen zur bestimmungsgemäßen Mahlschüssel zusammengebaut und komplettiert werden.
Unter Berücksichtigung der Größe des Außendurchmessers des Kopfflansches, kann dieser zweckmäßigerweise aus zwei, drei, vier oder einer anderen Anzahl an Segmenten hergestellt werden.

Der Fußflansch mit kleinerem Außendurchmesser kann in bevorzugter Weise einteilig hergestellt sein, soweit keine Sondertransporte erforderlich werden, zumal sich in diesem Fall konstruktive Vereinfachungen für die Übertragung der auf die Mahlschüssel einwirkenden Kräfte auf die Lagerung des Fußflansches und andererseits auf die Einleitung der Antriebsmomente für die Mahlschüssel ergeben.

Im Hinblick auf eine vereinfachte Fertigung können die zwei Gehäuseschalen vorteilhafterweise auch mehrteilig ausgebildet sein. Dies vereinfacht den Transport dieser Baugruppen und Segmente, wobei auch eine Herstellung dieser Teile in der Region der Produktionsstätte möglich wird.

Für die aushärtbare Vergussmasse wird eine möglichst inkompressible Masse mindestens mit nicht-schrumpfenden Eigenschaften gewählt, wobei dies insbesondere ein Beton, ein Harz oder ein Kunststoff, letzterer insbesondere auf Basis eines Hochleistungspolymers oder -Polyamids, sein kann.
Die aushärtbare Vergussmasse kann bevorzugt mit Fasern wie Glasfasern, Kohlefasern oder Metallfasern versetzt und verstärkt sein. Hierdurch können die mechanischen Eigenschaften der ausgehärteten Vergussmasse speziell verbessert und insbesondere Rissbildungen in der ausgehärteten Vergussmasse weitestgehend verhindert werden. Die Vergussmasse selbst kann in flüssiger, teilflüssiger oder breiige Form eingebracht, verdichtet und entlüftet werden. Das Einbringen der Vergussmasse kann in einer oder mehreren Arbeitsschritten durchgeführt werden, wobei auch verschiedene Schichten, deren Eigenschaften voneinander abweichen können, im Hohlraum zwischen den Gehäuseschalen erzeugt werden können.

Eine geeignete Vergussmasse könnte etwa nachfolgende Eigenschaften haben. Eine Mindestdruckfestigkeit im Bereich von 30 N/mm². Eine Mindestzugfestigkeit von etwa 5 N/mm². Einen Wärmeausdehnungskoeffizienten von etwa 5 - 15 x 10 ⁻⁶/°K. Ein maximales Quellmaß bei etwa 1%. Sofern ein minimales Schrumpfen der Vergussmasse zu berücksichtigen wäre, sollte dies < 0,5 % sein. Auch sollte eine Temperaturbeständigkeit bis mindestens 200 °C gegeben sein.

Der Kopfflansch und der Fußflansch werden vorzugsweise als Gussteile oder aus Eisen hergestellt, wobei letzteres auch Blechbrammen sein können.
Die Streckgrenze beziehungsweise 0,2 %-Dehngrenze für die Flansche sollte > 200 N/mm² sein und eine Bruchdehnung von > 3% erreicht werden.

Die Gehäuseschalen werden zweckmäßigerweise aus Stahl hergestellt und sind mit den beiden Flanschen fest verbunden. Auch Bleche, die zum Schweißen geeignet sind, können eingesetzt werden.

Für die Materialen der Gehäuseschalen sollte eine 0,2%-Dehngrenze von > 200 N/mm² und eine Bruchdehnung > 15% vorhanden sein.

Um das Einbringen der Vergussmasse in den ringförmigen Hohlraum zwischen den Gehäuseschalen zu ermöglichen, weist der Kopfflansch Gießöffnungen und Entlüftungsöffnungen auf. Hierzu sind im ringförmigen Kopfflansch über den Kreisumfang verteilt eine größere Anzahl Gießöffnungen vorgesehen. Mit Abstand zu diesen Gießöffnungen sind nach radial außen versetzt etwas kleinere Entlüftungsöffnungen im Kopfflansch vorhanden. Auf diese Weise wird einerseits das Vergussmaterial ohne wesentliche Einschlüsse eingebracht und andererseits ein gutes Entlüften des Hohlraumes zwischen den Gehäuseschalen ermöglicht.
Die Vergussmasse kann aber auch mit Hilfe geeigneter Rüttler noch weiter verdichtet und end-entlüftet werden, falls dies für erforderlich erachtet wird. Die Gießöffnungen sollten daher auch für den Einsatz von Rüttlern ausgelegt sein.

Im Rahmen der Entwicklung der Mahlschüssel hat sich gezeigt, dass die Vergussmasse etwa 40% bis 60 % der Gesamtmasse der Mahlschüssel bilden kann. Damit verbunden ist der Vorteil, dass sich das Gewicht der zu fertigenden Stahl- und Gussteile deutlich reduziert.
Aufgrund der leichteren Einzelteile erreicht man eine vereinfachte Handhabung dieser Teile und einen einfacheren Transport, so dass teuere Schwer- und Sondertransporte nicht mehr erforderlich sind. Das Transportgewicht kann auf diese Weise bis auf etwa 40% des Gesamtgewichtes bezogen auf eine einteilige Mahlschüssel reduziert werden. Der Zusammenbau der einzelnen Teile der Mahlschüssel braucht daher erst am Bestimmungsort zu erfolgen, wobei erst dort auch die auszuhärtende Vergussmasse in den ringförmigen Hohlraum zwischen den Gehäuseschalen einzubringen ist.
Dieses erfindungsgemäße Konzept führt daher zu einer deutlichen Kosteneinsparung bei einer derart aufgebauten Mahlschüssel, im Vergleich zu einer einteiligen aus Gussmaterial gefertigten Mahlschüssel.
Ein weiterer Vorteil kann darin gesehen werden, dass auf der Basis dieser Erfindung noch deutlich größere Mahlschüssel relativ kostengünstig realisiert werden können.

Das Verfahren zur Herstellung einer erfindungsgemäßen ringförmigen Mahlschüssel mit einer im Vertikalschnitt etwa kegelstumpfförmigen Hohlkörper-Struktur zeichnet sich dadurch aus, dass zunächst ein Kopfflansch und ein Fußflansch der Mahlschüssel mehrteilig oder beim Fußflansch einteilig separat hergestellt werden. Ebenfalls wird ein den Kopf- und Fußflansch verbindendes Mittelteil, das zwei Gehäuseschalen aufweist, separat hergestellt.

An den gegeneinander gerichteten Flächen der Gehäuseschalen werden in dem dazwischen gebildeten Hohlraum Verstärkungsanker mit unterschiedlicher Ausrichtung angebracht.

Nachfolgend werden die Baugruppen aus Kopfflansch, Gehäuseschalen des Mittelteils und Fußflansch fest miteinander verbunden und anschließend wird durch die Öffnungen im Kopfflansch in den zwischen den Gehäuseschalen gebildeten Hohlraum die aushärtbare Vergussmasse relativ kalt eingefüllt. Die Vergussmasse mit der Eigenschaft eines nicht-schrumpfenden Volumens wird ausgehärtet oder härtet selbst aus, so dass nach der Aushärtung eine starre, rotationssteife Einheit als Mahlschüssel vorliegt.

Es entsteht auf diese Weise aus den Einzelteilen und Baugruppen eine fertige Mahlschüssel als untrennbare Einheit. Zusätzlich kann durch die einbrachten Verstärkungsanker, die in der ausgehärteten Vergussmasse eingebettet sind, die form- und kraftschlüssige Verbindung insbesondere mit den Gehäuseschalen aber auch dem Kopf- und Fußflansch verbessert werden.
An Stelle der Verstärkungsanker oder in Kombination damit kann auch eine Wabenstruktur verwendet und ausgegossen werden.

Das erfindungsgemäße Konzept der Mahlschüssel ermöglicht daher ein gleiches oder sogar höheres Gesamtgewicht für die Mahlschüssel im Vergleich mit einer einteiligen Mahlschüssel, so dass trotz des Einsatzes eines Vergussmaterials die gewünschte "Ambosswirkung" der Mahlschüssel, wie sie bisher bei einteiligen aus Guss bestehenden Mahlschüsseln erreicht wurde, auch bei einer erfindungsgemäßen Hybrid-Mahlschüssel vorhanden ist.

Die "Ambosswirkung" unter der die Aufnahme und das Abfedern von vertikal auf die Mahlbahn und die Mahlschüssel einwirkenden Kräften zu verstehen ist, kann daher auch bei der erfindungsgemäßen Hybrid-Mahlschüssel erreicht werden.

Die erfindungsgemäße Mahlschüssel wird nachfolgend anhand schematischer Zeichnungen zweier Beispiele noch näher erläutert. Es zeigen:
- Fig. 1: einen Vertikalschnitt durch eine erfindungsgemäße Mahlschüssel entsprechend einem ersten Beispiel, insbesondere zu den Verstärkungsankern;
- Fig. 2: einen vergleichbaren Vertikalschnitt durch ein zweites Bespiel einer erfindungsgemäßen Mahlschüssel, insbesondere mit anderen Verstärkungsankern als in Fig. 1;
- Fig. 3: eine Draufsicht auf die Mahlschüssel nach Fig. 2, wobei in der linken Hälfte zur Linie L-L die Mahlschüssel mit einem aufgebrachten Kopfflansch und entsprechenden Öffnungen darin dargestellt ist und die unterbrochenen Linienzüge stangenartige Versteifungsanker und deren Orientierung darstellen; der rechte Teil von der Linie L-L in Fig. 3 zeigt die Mahlschüssel nach Fig. 2 in einer Draufsicht mit abgenommenem Kopfflansch und die Einbettung von stangenartigen Verstärkungsankern mit durchgezogenen Linien in einer Vergussmasse; und
- Fig. 4: einen Vertikalschnitt durch eine einstückig hergestellte Mahlschüssel aus Gussmaterial nach einem Stand der Technik mit ihren wesentlich Bestandteilen.

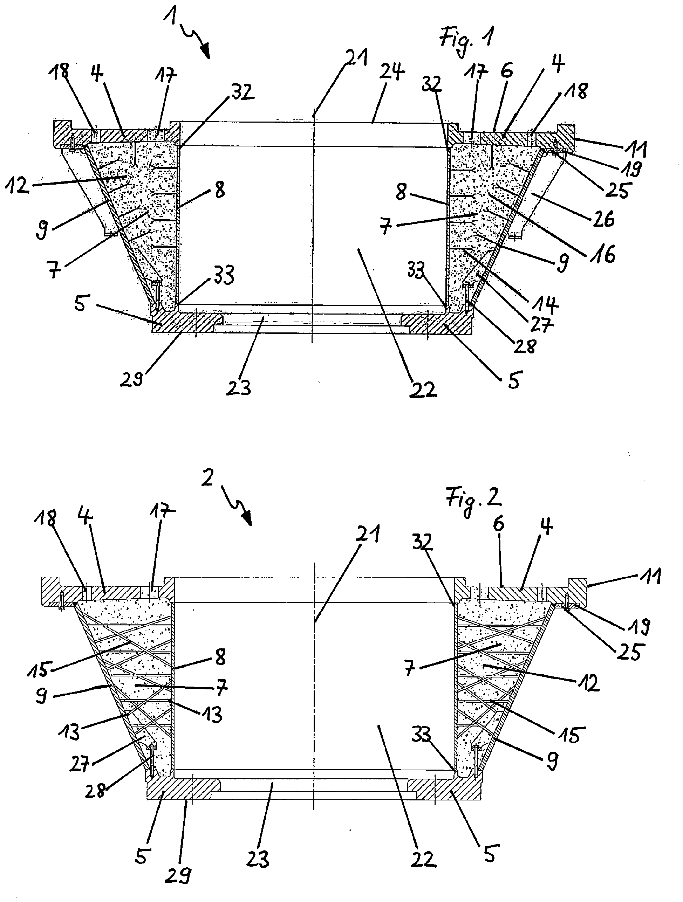

Die in Fig. 1 im Vertikalschnitt gezeigte Mahlschüssel 1 ist ringförmig aus mehreren Baugruppen hergestellt, um für das herstellende Unternehmen dieser Mahlschüssel eine höherer Flexibilität im Hinblick auf die Abmessungen, auf Lieferzeiten und auf Transportkosten und letzten Endes der gesamten Herstellkosten einschließlich Aufstellung am Bestimmungsort, zu erreichen.
Die Mahlschüssel 1 weist als untere Baugruppe einen ringförmigen Fußflansch 5 auf, der unter Berücksichtigung seines Außendurchmessers vorzugsweise einstückig aus einem Gussmaterial oder Stahlmaterial hergestellt ist. Auf der Oberseite der Mahlschüssel 1 ist ein ringförmiger Kopfflansch 4 vorgesehen, der einen größeren Außendurchmesser 11 als der Fußflansch 5 aufweist.
Der aus einem Gussmaterial gefertigte Kopfflansch 4 hat bevorzugterweise mehrere Ringsegmente und kann beispielsweise aus drei oder vier Ringsegmenten bestehen. Mittig und symmetrisch zu einer Rotationsachse 21 ist im Kopfflansch 4 eine kreisförmige Schüsselöffnung 24 vorgesehen. Des Weiteren sind kreisförmige Gießöffnungen 17 und Entlüftungsöffnungen 18 im Kopfflansch vorhanden.
Der Kopfflansch 4 und dessen Ringsegmente werden bevorzugt aus Gussmaterial oder zum Beispiel aus Blechbrammen hergestellt.

Des Weiteren weist die Mahlschüssel 1 ein ringförmiges Mittelteil 7 auf, das aus einer inneren Gehäuseschale 8 und einer äußeren Gehäuseschale 9 gebildet ist.
Während die innere Gehäuseschale 8 sich, ausgehend von einem unteren Befestigungsbereich 33 mit dem Fußflansch 5, etwa vertikal nach oben erstreckt, ist die äußere Gehäuseschale 9 konusartig mit einem Öffnungswinkel nach oben im äußeren Bereich des ringförmigen Fußflansches 5 befestigt.

Beide Gehäuseschalen 8 und 9 können zweckmäßigerweise mehrteilig und insbesondere jeweils aus zwei Segmenten hergestellt sein, die bevorzugt durch Zusammenschweißen einen inneren Gehäusering und im Außenbereich einen äußeren konusförmigen Gehäusering ergeben. Beide Gehäuseschalen 8, 9 sind vorzugsweise aus einem Eisenwerkstoff hergestellt.
Im montierten Zustand der Mahlschüssel 1 bilden diese Gehäuseschalen 8, 9 zwischen sich einen etwa keilförmigen, sich nach unten verjüngenden Hohlraum 12. Kopfseitig ist das obere Ende der äußeren Gehäuseschale 9 mit einem Flacheisenring 19 als horizontal auskragenden Flansch ausgestattet, der einerseits zum Beispiel angeschweißt am oberen Ende der äußeren Gehäuseschale 9 fixiert ist und andererseits zum Beispiel über eine Schraubbefestigung 25 an der unteren Fläche des Kopfflansches 4 in dessen Außenbereich damit fest verbunden ist.

Nach dem Erstellen der Gehäuseschalen 8, 9 beziehungsweise deren Segmente, sind Verstärkungsanker 14, die im Beispiel stangenartig und mit einem V-förmigen Ende ausgestattet sind, fest an den Innenwandungen der Gehäuseschalen 8, 9, insbesondere angeschweißt. Auch ein Anschrauben ist möglich. Im dargestellten Beispiel ragen diese Verstärkungsanker etwa senkrecht von ihren Befestigungsflächen ausgehend in den Hohlraum 12. Im gezeigten Beispiel nach Fig. 1 haben diese Verstärkungsanker 14 eine kürzere Länge, die nicht bis zur gegenüberliegenden Innenfläche der entsprechenden Gehäuseschale reicht. Eine Anbringung von Verstärkungsankern ist auch auf der Unterseite des Kopfflansches 4 möglich.

An ihren oberen Endbereichen sind die Gehäuseschalen 8, 9 über Befestigungen 32 und 25 einerseits mit dem Kopfflansch 4 fest verbunden. Gleiches gilt für die unteren Bereiche, wobei Befestigungen 33 für die innere Gehäuseschale 8 und Befestigungen zum Beispiel mittels eines Befestigungsankers 27 und eines Schraubbolzens 28 zur festen Verbindung der äußeren Gehäuseschale 9 mit dem Fußflansch 5, vorgesehen sind. Diese Fixierungen der Gehäuseschalen 8, 9 mit den Flanschen 4 und 5 können auch form- und kraftschlüssig miteinander erfolgen.

An der Außenfläche der äußeren Gehäuseschale 9 ist im Beispiel zur weiteren Verstärkung des Eisenringes und insbesondere des oberen horizontal auskragenden Flacheisenrings 19, vom oberen bis in den mittleren Bereich der Gehäuseschale 9 reichend, ein Verstärkungseisen 26, zum Beispiel angeschweißt, so dass insgesamt eine höhere Steifigkeit zwischen dem Mittelteil 7 und dem Kopfflansch 4 erreicht wird.

Nach dem vorausgehend beschriebenen Aufbau und Zusammenbau der einzelnen Baugruppen zur Mahlschüssel 1 nach Fig. 1, erfolgt nunmehr ein weiterer wesentlicher Schritt zur Endfertigung der gewünschten Mahlschüssel 1.
Über die Gießöffnungen 17 wird nunmehr eine Vergussmasse 16 eingebracht, die den zwischen den Gehäuseschalen 8 und 9 gebildeten Hohlraum 12 vollständig und dicht, insbesondere ohne Lufteinschlüsse, ausfüllen soll.
Es wird hierfür eine beim Aushärten nicht-schrumpfende Masse gewählt, die geeigneter Weise in der Aushärtphase eine etwas quellende Eigenschaft aufweist.
Entlüftungsöffnungen 18 sind etwas radial nach außen versetzt von den Gießöffnungen 17 im Kopfflansch vorgesehen. Diese Entlüftungsöffnungen 18 ermöglichen ein gutes Entweichen der im Hohlraum 12 vorhandenen Gase in der Phase des Einbringens der Vergussmasse 16, so dass auch ein dichtes Abschließen an den Grenzflächen zwischen Vergussmasse und Metall- beziehungsweise Gussflächen erreicht wird.

Eine bevorzugte Vergussmasse stellt zum Beispiel eine Betonmischung dar, die im Zusammenwirken mit den angebrachten Verstärkungsankern im genannten Beispiel im Hohlraum 12 einen Ringkern aus Stahlbeton mit hoher Druck- und Zugfestigkeit bei relativ geringem Wärmeausdehnungskoeffizient ergibt.
Andere Vergussmassen können auf der Basis von Harzen oder Kunststoffen, und hierbei insbesondere auf der Basis eines Hochleistungspolymers oder Polyamids, eingesetzt werden.

Die Mahlschüssel 1 nach Fig. 1 hat im Fußflansch 5 eine gestufte ringförmige Bodenöffnung 23.
Die fertige Mahlschüssel 1 ruht daher als Baugruppe einer Vertikalmühle mit der unteren Fläche 29 des Fußflansches 5 auf einer Lageranordnung, welche die Rotation der Mahlschüssel 1 ermöglicht. Andererseits ist im Bereich der Bodenöffnung 23 der Getriebeflansch zum rotativen Antrieb der Mahlschüssel vorgesehen.

Das erfindungsgemäße Konzept zur Herstellung einer schematisch dargestellten Mahlschüssel erlaubt nicht nur eine erhebliche Kostenreduzierung im Vergleich zu einer einstückig hergestellten Guss-Mahlschüssel
Es hat sich sogar gezeigt, dass das Gesamtgewicht einer derart hergestellten Mahlschüssel höher konzipiert werden kann, zum Beispiel bei ca. 100 t liegt, im Vergleich mit einer einstückigen Guss-Mahlschüssel etwa gleicher Abmessungen, die etwa ein Gewicht von ca. 90 t aufweisen kann.
Dies wird auch dadurch erreicht, dass das zwischen den Gehäuseschalen 8, 9 vorhandene Volumen des Hohlraumes 12 etwa viermal so groß ist wie das Volumen des Mittelteils 43 einer Guss-Mahlschüssel.
Berücksichtigt man dann zum Beispiel eine Vergussmasse aus Stahlbeton, so kann eine Gewichtsrelation zwischen der Vergussmasse mit etwa 60% der gesamten Masse der Mahlschüssel erreicht werden, während nur ca. 40% des Gesamtgewichts auf die Guss- und Metallteile der weiteren Baugruppen der Mahlschüssel entfallen.

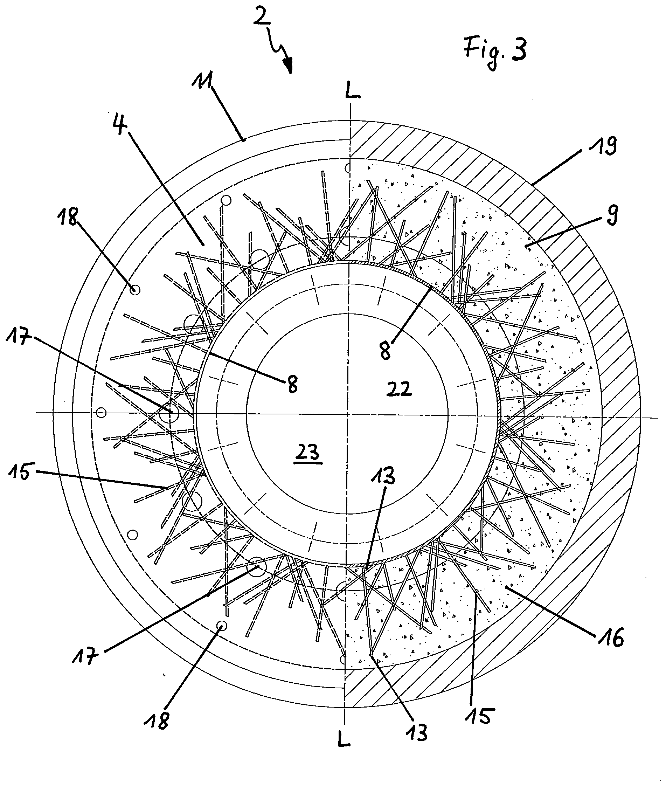

Im Hinblick auf die nachfolgenden Figuren 2 und 3 wird darauf hingewiesen, dass gleiche Bezugszeichen in dieser Anmeldung auch gleiche Baugruppen und Gegenstände betreffen.

Die als weiteres Beispiel in Fig. 2 gezeigte Mahlschüssel 2 zeigt im Vertikalschnitt im Wesentlichen den Aufbau, wie er zur Fig. 1 bereits beschrieben wurde.
Der wesentliche Unterschied besteht im Vergleich zur Mahlschüssel 1 nach Fig. 1 in der Anordnung der Verstärkungsanker 15 innerhalb des Hohlraumes 12, der zwischen der inneren Gehäuseschale 8 und der äußeren konischen Gehäuseschale 9 gebildet ist.

Im Beispiel nach Fig. 2 sind die Verstärkungsanker 15 in dem auszugießenden Hohlraum zwischen innerer Gehäuseschale 8 und äußerer, konisch verlaufender Gehäuseschale 9 so angeordnet, dass die Enden 13 der Verstärkungsanker jeweils auf beiden Innenflächen der Gehäuseschalen 8, 9 verschweißt sind.
Es ist hierbei nicht nur eine radial Ausrichtung und Orientierung der Verstärkungsanker vorgesehen, sondern die Verstärkungsanker 15 können auch auf unterschiedlicher Höhe mit und an der entsprechenden Gehäuseschale 8, 9 verschweißt sein.

Unter Einbeziehung der Fig. 3 wird daraus erkennbar, dass die Verstärkungsanker 15 zum Beispiel ausgehend von der nach außen zeigenden Fläche der inneren Gehäuseschale 8 nahezu jeden beliebigen Orientierungswinkel einnehmen können. Mit anderen Worten Überlappungen, Überschneidungen, Überquerungen von Verstärkungsankern 15 im Nahbereich sind nicht nur in der horizontalen Ebene sondern dreidimensional unter Einbeziehung der vertikalen Richtung vorgesehen.
Die Verstärkungsanker können auch miteinander verknotet sein.

Die Ausrichtung der Verstärkungsanker 15 kann auch eine Winkelkomponente entgegengesetzt zur Rotationsrichtung der Mahlschüssel 2 aufweisen, wodurch die Übertragung von einwirkenden Kräften und Drehmomenten auf die Vergussmasse und die damit starr verbundenen Baugruppen verbessert wird.

Die schematische Darstellung nach Fig. 3 zeigt im linken Bereich der Linie L-L sozusagen eine Draufsicht auf die Mahlschüssel 2 nach Fig. 2 mit aufgesetztem Kopfflansch 4.
Die in der oberen Fläche des Kopfflansches 4 gebildete Rinne 6 weist im Beispiel radial innen liegende Gießöffnungen 17 und nach radial außen angeordnete zum Beispiel kreisförmige Entlüftungsöffnungen 18 auf.
Beim Vergießen des inneren Hohlraumes 12 mittels der Vergussmasse durch die Gießöffnungen 17 kann das im Hohlraum vorhandene Gas begünstigt durch die konische Orientierung der äußeren Gehäuseschale 9 über die Entlüftungsöffnungen 18 leicht entweichen.
Die verfüllte Vergussmasse kann auch zur besseren Verdichtung zum Beispiel über die Gießöffnungen 17 mittels Rüttler verdichtet werden.
Die Öffnungen 17 und 18 werden zweckmäßigerweise mittels der Vergussmasse oder einem anderen Material verschlossen.

Zur Erstellung der Mahlbahn selbst werden in die Rinne 6 entsprechende Segmente, üblicherweise aus gehärteten Eisenwerkstoffen, eingelegt und befestigt.

Die in Fig. 3 in der rechten Hälfte der Linie L-L dargestellte Draufsicht zeigt den rechten Teil der Mahlschüssel 2 nach Fig. 2 sozusagen mit abgenommenem Kopfflansch 4. Der äußere Halbkreis 19 stellt dabei den Flacheisenring dar, der nach Fig. 2 von unten mittels einer Schraubbefestigung 25 den Kopfflansch 4 trägt.
Die dargestellten Figuren sind schematische Zeichnungen, so dass Vereinfachungen in den Darstellungen vorliegen.
Beispielsweise hat der Außenrand des Flacheisenringes 19 einen geringfügig kleineren Durchmesser als der Außenrand 11 des Kopfflansches 4.

Im rechten Teil der Fig. 3 sind die mit ausgezogenen Linien dargestellten Verstärkungsanker 15 als Stäbe in der Vergussmasse 16 eingebettet, wobei Überkreuzungen und Überlappungen der Verstärkungsanker 15 erkennbar sind.

Das erfindungsgemäße mehrteilige Konzept zur Herstellung einer Mahlschüssel schafft daher eine hohe Flexibilität im Hinblick auf die materialmäßige wie dimensionsmäßige Auslegung einer Mahlschüssel, wobei auch bei erheblicher Kostenreduzierung die qualitativen Erfordernisse an eine Mahlschüssel erfüllt werden können.

## Patentansprüche

1. Mahlschüssel (1, 2), insbesondere für Vertikalmühlen,
mit einem unteren ringförmigen Fußflansch (5) und
einem oberen ringförmigen Kopfflansch (4) zur Bildung oder Aufnahme einer Mahlbahn der Vertikalmühle,
wobei die Mahlschüssel (1, 2) ringförmig und im Bereich um ihre Rotationsachse hohl ausgebildet ist, und
ein den Kopf- und Fußflansch (4, 5) starr verbindendes Mittelteil (7) aufweist,
wobei ein zwischen den Gehäuseschalen (8, 9) des Mittelteils (7) und den beiden Flanschen (4, 5) gebildeter Hohlraum (12) mit einer aushärtbaren Vergussmasse (16) verfüllt ist, und
wobei die beiden Flansche (4, 5) mit Mittelteil (7) nach Aushärtung der Vergussmasse (16) eine rotationssteife Mahlschüssel (1, 2) bilden,
**dadurch gekennzeichnet,**
**dass** das zwischen Kopf- und Fußflansch (4, 5) vorgesehene Mittelteil (7) separat von Kopf- und Fußflansch (4, 5) hergestellt ist und doppelwandig mit zwei Gehäuseschalen (8, 9) ausgebildet ist und
**dass** die Gehäuseschalen (8, 9) des Mittelteils (7) Verstärkungsanker (14, 15) aufweisen, die in der ausgehärteten Vergussmasse (12) eingebettet sind.

2. Mahlschüssel nach Anspruch 1,
**dadurch gekennzeichnet,**
**dass** der Kopfflansch (4) einen größeren Außendurchmesser aufweist als der Fußflansch (5).

3. Mahlschüssel nach einem der Ansprüche 1 bis 2,
**dadurch gekennzeichnet,**
**dass** die zwei Gehäuseschalen (8, 9) im Vertikalschnitt etwa keilförmig zueinander mit verjüngender Struktur in Richtung des Fußflansches (5) angeordnet sind.

4. Mahlschüssel nach einem der Ansprüche 1 bis 2,
**dadurch gekennzeichnet,**
**dass** die zwei Gehäuseschalen (8, 9) etwa einen gleichbleibenden radialen Abstand zueinander aufweisen.

5. Mahlschüssel nach einem der Ansprüche 1 bis 4,
**dadurch gekennzeichnet,**
**dass** mindestens der Kopfflansch (4) mehrteilig ausgebildet ist.

6. Mahlschüssel nach einem der Ansprüche 1 bis 5,
**dadurch gekennzeichnet,**
**dass** die zwei Gehäuseschalen (8, 9) mehrteilig ausgebildet sind.

7. Mahlschüssel nach einem der Ansprüche 1 bis 6,
**dadurch gekennzeichnet,**
**dass** der Fußflansch (5) einteilig ausgebildet ist.

8. Mahlschüssel nach einem der Ansprüche 1 bis 7,
**dadurch gekennzeichnet,**
**dass** die Mahlschüssel (1, 2) im Vertikalschnitt im Wesentlichen die Struktur eines hohlen Kegelstumpfes aufweist.

9. Mahlschüssel nach einem der Ansprüche 1 bis 8,
**dadurch gekennzeichnet,**
**dass** die aushärtbare Vergussmasse (16) mindestens eine nicht-schrumpfende Masse ist, insbesondere ein Beton, ein Harz oder ein Kunststoff, insbesondere auf Basis eines Hochleistungspolymers oder -polyamids.

10. Mahlschüssel nach einem der Ansprüche 1 bis 9,
**dadurch gekennzeichnet,**
**dass** die Vergussmasse (16) mit Fasern, insbesondere mit Glasfasern, Kohlefasern oder Metallfasern verstärkt ist.

11. Mahlschüssel nach einem der Ansprüche 2 bis 10,
**dadurch gekennzeichnet,**
**dass** die Verstärkungsanker (14, 15) mit unterschiedlicher Ausrichtung in dem zwischen den Gehäuseschalen (8, 9) gebildeten Hohlraum (12) angeordnet sind und
endseitig (13) mindestens an einer oder beiden Gehäuseschalen (8, 9) fixiert, insbesondere angeschweißt, sind.

12. Mahlschüssel nach einem der Ansprüche 1 bis 11,
**dadurch gekennzeichnet,**
**dass** die Flansche (4, 5) als Gussteile oder aus Eisen hergestellt sind.

13. Mahlschüssel nach einem der Ansprüche 1 bis 12,
**dadurch gekennzeichnet,**
**dass** die Gehäuseschalen (8, 9) aus Stahl hergestellt sind und mit beiden Flanschen (4, 5) fest verbunden sind.

14. Mahlschüssel nach einem der Ansprüche 1 bis 13,
**dadurch gekennzeichnet,**
**dass** der Kopfflansch (4) Gießöffnungen (17) und Entlüftungsöffnungen (18) aufweist.

15. Verfahren zur Herstellung einer ringförmigen Mahlschüssel mit einer im Vertikalschnitt etwa kegelstumpfförmigen Hohlkörper-Struktur, insbesondere nach einem der Ansprüche 1 bis 14,
**dadurch gekennzeichnet,**
a) **dass** der Kopfflansch (4) der Mahlschüssel (1, 2) mehrteilig und der Fußflansch (15) der Mahlschüssel (1, 2) mehrteilig oder einteilig, separat hergestellt werden,
b) **dass** ein Mittelteil der Mahlschüssel (1, 2) zwei Gehäuseschalen (8, 9) zwischen Kopf- und Fußflansch aufweist, die separat hergestellt werden,
c) **dass** Verstärkungsanker (15) an gegeneinander gerichteten Flächen der Gehäuseschalen (8, 9) angebracht werden,
d) **dass** die Baugruppen Kopfflansch (4), Gehäuseschalen (8, 9) des Mittelteils (7) und Fußflansch (5) miteinander fest verbunden werden,
e) **dass** eine aushärtbare Vergussmasse (16) durch Öffnungen (17, 18) im Kopfflansch (4) in einen zwischen den Gehäuseschalen (8, 9) gebildeten Hohlraum (12) eingebracht wird,
f) **dass** die Vergussmasse (16) bei nicht-schrumpfendem Volumen ausgehärtet wird und
g) nach Aushärtung eine starre rotationssteife Einheit als Mahlschlüssel bildet.

## Claims

1. A milling bowl (1, 2), in particular, for use in vertical mills,
having a lower ring-shaped base flange (5) and
an upper ring-shaped head flange (4) for forming or receiving a grinding bed of the vertical mill,
wherein the milling bowl (1, 2) is ring-shaped and constructed to be hollow in the area surrounding its axis of rotation, and
features a center piece (7), which connects rigidly the head flange and the base flange (4, 5),
wherein a cavity (12), which is formed between the casing shells (8, 9) of the center piece (7) and the two flanges (4, 5), is filled with a curable casting compound (16), and
wherein, after the casting compound (16) has cured, the two flanges (4, 5) along with the center piece (7) form a rotationally rigid milling bowl (1, 2),
**characterized in that**
the center piece (7) provided between the head flange and the base flange (4, 5) is produced separately from the head flange and the base flange (4, 5) and is of double-walled design with two casing shells (8, 9), and
that the casing shells (8, 9) of the center piece (7) feature reinforcement anchors (14, 15), which are embedded into the cured casting compound (12).

2. The milling bowl according to claim 1,
**characterized in that**
the head flange (4) has a greater outer diameter than the base flange (5).

3. The milling bowl according to any of claims 1 to 2,
**characterized in that**
the two casing shells (8, 9) are arranged to make a nearlywedge-shaped structure in a vertical section which tapers together in the direction of the base flange (5).

4. The milling bowl according to any of claims 1 to 2,
**characterized in that**
the two casing shells (8, 9) are situated at an approximate constant radial distance from one another.

5. The milling bowl according to any of claims 1 to 4,
**characterized in that**
at least the head flange (4) is constructed to be a plurality of pieces.

6. The milling bowl according to any of claims 1 to 5,
**characterized in that**
the two casing shells (8, 9) are constructed to be a plurality of pieces.

7. The milling bowl according to any of claims 1 to 6,
**characterized in that**
the base flange (5) is constructed to be one piece.

8. The milling bowl according to any of claims 1 to 7,
**characterized in that**
the milling bowl (1, 2) has, in its vertical section, essentially the structure of a hollow truncated cone.

9. The milling bowl according to any of claims 1 to 8,
**characterized in that**
the curable casting compound (16) is at least a non-shrinking mass, in particular, a concrete, a resin, or a plastic, in particular based on a high-performance polymer or polyamide.

10. The milling bowl according to any of claims 1 to 9,
**characterized in that**
the casting compound (16) is reinforced with fibers, in particular, with glass fibers, carbon fibers, or metal fibers.

11. The milling bowl according to any of claims 2 to 10,
**characterized in that**
the reinforcement anchors (14, 15) are arranged at varying orientations within the cavity (12) formed between the casing shells (8, 9), and
the reinforcement anchor ends (13) are affixed, in particular, welded to at least one, or to both, of the casing shells (8, 9).

12. The milling bowl according to any of claims 1 to 11,
**characterized in that**
the flanges (4, 5) are produced as cast pieces or are made from iron.

13. The milling bowl according to any of claims 1 to 12,
**characterized in that**
the casing shells (8, 9) are produced from steel and are rigidly connected to both flanges (4, 5).

14. The milling bowl according to any of claims 1 to 13,
**characterized in that**
the head flange (4) features casting openings (17) and aeration openings (18).

15. A method for producing a ring-shaped milling bowl having, in a vertical section, a hollow structure with the approximate shape of a truncated cone, in particular, according to any of claims 1 to 14,
**characterized in that**
a) the head flange (4) of the milling bowl (1, 2) is separately produced as a plurality of pieces, and the base flange (15) of the milling bowl (1, 2) is produced separately as a plurality of pieces or as one piece,
b) a center piece of the milling bowl (1, 2) features two separately produced casing shells (8, 9) between the head flange and the base flange,
c) reinforcement anchors (15) are attached to opposing surfaces of the casing shells (8, 9),
d) components including the head flange (4), the casing shells (8, 9) of the center piece (7), and the base flange (5) are rigidly connected with one another,
e) a curable casting compound (16) is introduced into the cavity (12) formed between the casing shells (8, 9) via openings (17, 18) in the head flange (4)
f) the casting compound (16) is cured at a non-shrinking volume, and
g) following the curing process, a milling bowl is formed as a stiff, rotationally rigid unit.

## Revendications

1. Cuve de broyage (1, 2), en particulier pour des broyeurs verticaux,
avec une collerette de base (5) inférieure de forme annulaire et
une collerette de tête (4) supérieure de forme annulaire servant à former ou à recevoir une piste de broyage du broyeur vertical,
dans laquelle la cuve de broyage (1, 2) est réalisée de forme annulaire et de manière creuse dans la zone autour de son axe de rotation, et
présente une partie centrale (7) reliant de manière figée la collerette de tête et la collerette de base (4, 5),
dans laquelle un espace creux (12) formé entre les coques de boîtier (8, 9) de la partie centrale (7) et les deux collerettes (4, 5) est rempli d'une masse de scellement (16) durcissable, et
dans laquelle les deux collerettes (4, 5) forment avec la partie centrale (7) après le durcissement de la masse de scellement (16) une cuve de broyage (1, 2) rigide en rotation,
**caractérisée en ce**
**que** la partie centrale (7) prévue entre la collerette de tête et la collerette de base (4, 5) est fabriquée séparément de la collerette de tête et de la collerette de base (4, 5) et est réalisée avec une double paroi avec deux coques de boîtier (8, 9), et
**que** les coques de boîtier (8, 9) de la partie centrale (7) présentent des ancres de renforcement (14, 15), qui sont incorporées dans la masse de scellement (12) durcie.

2. Cuve de broyage selon la revendication 1,
**caractérisée en ce**
**que** la collerette de tête (4) présente un diamètre extérieur plus grand que la collerette de base (5).

3. Cuve de broyage selon l'une quelconque des revendications 1 à 2,
**caractérisée en ce**
**que** les deux coques de boîtier (8, 9) sont disposées à peu près en forme de coin l'une par rapport à l'autre dans la coupe verticale avec une structure se rétrécissant en direction de la collerette de base (5).

4. Cuve de broyage selon l'une quelconque des revendications 1 à 2,
**caractérisée en ce**
**que** les deux coques de boîtier (8, 9) présentent une distance radiale substantiellement constante l'une par rapport à l'autre.

5. Cuve de broyage selon l'une quelconque des revendications 1 à 4,
**caractérisée en ce**
**qu'**au moins la collerette de tête (4) est réalisée en plusieurs parties.

6. Cuve de broyage selon l'une quelconque des revendications 1 à 5,
**caractérisée en ce**
**que** les deux coques de boîtier (8, 9) sont réalisées en plusieurs parties.

7. Cuve de broyage selon l'une quelconque des revendications 1 à 6,
**caractérisée en ce**
**que** la collerette de base (5) est réalisée en une partie.

8. Cuve de broyage selon l'une quelconque des revendications 1 à 7,
**caractérisée en ce**
**que** la cuve de broyage (1, 2) présente dans la coupe verticale sensiblement la structure d'un cône tronqué creux.

9. Cuve de broyage selon l'une quelconque des revendications 1 à 8,
**caractérisée en ce**
**que** la masse de scellement (16) durcissable est au moins une masse ne se rétractant pas, en particulier un béton, une résine ou une matière synthétique, en particulier à base d'un polymère ou d'un polyamide haute performance.

10. Cuve de broyage selon l'une quelconque des revendications 1 à 9,
**caractérisée en ce**
**que** la masse de scellement (16) est renforcée avec des fibres, en particulier avec des fibres de verre, des fibres de carbone ou des fibres de métal.

11. Cuve de broyage selon l'une quelconque des revendications 2 à 10,
**caractérisée en ce**
**que** les ancres de renforcement (14, 15) sont disposées avec une orientation différente dans l'espace creux (12) formé entre les coques de boîtier (8, 9) et
sont fixées, en particulier sont soudées, du côté d'une extrémité (13) au moins au niveau d'une ou des deux coques de boîtier (8, 9).

12. Cuve de broyage selon l'une quelconque des revendications 1 à 11,
**caractérisée en ce**
**que** les collerettes (4, 5) sont fabriquées en tant que pièces de fonte ou à partir de fer.

13. Cuve de broyage selon l'une quelconque des revendications 1 à 12,
**caractérisée en ce**
**que** les coques de boîtier (8, 9) sont fabriquées à partir d'acier et sont reliées de manière solidaire aux deux collerettes (4, 5).

14. Cuve de broyage selon l'une quelconque des revendications 1 à 13,
**caractérisée en ce**
**que** la collerette de tête (4) présente des ouvertures de coulée (17) et des ouvertures d'aération (18).

15. Procédé servant à fabriquer une cuve de broyage de forme annulaire avec une structure à corps creux présentant à peu près une forme de cône tronqué dans la coupe verticale, en particulier selon l'une quelconque des revendications 1 à 14,
**caractérisé en ce**
a) **que** la collerette de tête (4) de la cuve de broyage (1, 2) est fabriquée en plusieurs parties et la collerette de base (15) de la cuve de broyage (1, 2) est fabriquée séparément en plusieurs parties ou en une partie,
b) **qu'**une partie centrale de la cuve de broyage (1, 2) présente deux coques de boîtier (8, 9) entre la collerette de tête et la collerette de base, qui sont fabriquées séparément,
c) **que** des ancres de renforcement (15) sont installées au niveau de surfaces dirigées à l'opposé les unes des autres des coques de boîtier (8, 9),
d) **que** les modules collerette de tête (4), coques de boîtier (8, 9) de la partie centrale (7) et collerette de base (5), sont reliés de manière solidaire les uns aux autres,
e) **qu'**une masse de scellement (16) durcissable est introduite à travers des ouvertures (17, 18) dans la collerette de tête (4) dans un espace creux (12) formé entre les coques de boîtier (8, 9),
f) **que** la masse de scellement (16) est durcie sans que des volumes ne se rétractent, et
g) après le durcissement une unité rigide en rotation figée se forme en tant que cuve de broyage.
